# EUROPEAN PATENT APPLICATION

(11) **EP 4 582 226 A1**
(43) Date of publication of application: **09.07.2025**
(21) Application number: 23902560.4
(22) Date of filing: 06.12.2023
(51) Int. Cl.: B25J 13/00

(54) **MECHANICAL FINGER CONTROL METHOD, APPARATUS AND SYSTEM, AND DEVICE**

(30) Priority: 16.12.2022 CN 202211625382
(71) Applicant: Hai Robotics Co., Ltd., Shenzhen, Guangdong 518000 (CN)
(72) Inventor: NING, Kejun, Shenzhen, Guangdong 518000 (CN); HUANG, Hongqi, Shenzhen, Guangdong 518000 (CN); XU, Shengdong, Shenzhen, Guangdong 518000 (CN)
(74) Representative: Gulde & Partner
(86) International application number: PCT/CN2023/136847
(87) International publication number: WO 2024/125364

(57) **Abstract**

This application provides a method, an apparatus, and a system for controlling a mechanical finger, and a device. This application relates to the field of robot technologies and smart warehouse technologies. The method includes: obtaining a mechanical limit interval of the mechanical finger in response to a control instruction; determining a limit position within the mechanical limit interval and an avoidance angle corresponding to the limit position; determining, based on the limit position and the avoidance angle corresponding to the limit position, an opening/closing angle of the mechanical finger; and controlling, based on the opening/closing angle, a reduction motor to drive the mechanical finger to execute an opening action or a closing action. This application is used to resolve a problem of mechanical impact caused by rotational motion performed by the mechanical finger that cannot be resolved by the prior art, and to achieve the technical effects of avoiding the mechanical impact caused by the rotational motion performed by the mechanical finger, reducing impact damage to parts in a tote robot, and improving reliability.

## Description

### CROSS-REFERENCES

This application claims priority to Patent No. CN202211625382.8, filed on December 16, 2022, entitled "METHOD, APPARATUS, AND SYSTEM FOR CONTROLLING MECHANICAL FINGER, AND DEVICE ", which is incorporated herein by reference in its entirety.

### TECHNICAL FIELD

This application relates to the field of robot technologies and smart warehouse technologies, and in particular, to a method, an apparatus, and a system for controlling a mechanical finger, a device, and a medium.

### BACKGROUND OF THE INVENTION

In the prior art, to control a mechanical finger, a reduction motor is usually used to drive a finger shaft, so as to drive the mechanical finger to perform rotational motion.

To eliminate a mechanical impact caused by the rotational motion performed by the mechanical finger, the existing solution installs a position switch near the opening and closing positions. When the mechanical finger is in place, the motor is controlled through an output signal of the position switch to stop supplying power.

However, this improvement has a limited effect and system complexity increases. Because the mechanical impact cannot be eradicated, there are still problems such as breakage of a shaft of the reduction motor, burnout of the motor, deformation of a mechanical limit, and damage to the position switch.

### SUMMARY OF THE INVENTION

This application provides a method, an apparatus, and a system for controlling a mechanical finger, an electronic device, and a storage medium. This application is used to resolve a problem of mechanical impact caused by rotational motion performed by the mechanical finger that cannot be resolved by the prior art, and to achieve the technical effects of avoiding the mechanical impact caused by the rotational motion performed by the mechanical finger, reducing impact damage to parts in a tote robot, and improving reliability.

To achieve the foregoing objective, according to one aspect, this application provides a method for controlling a mechanical finger. The mechanical finger is disposed on a tote robot, and the method includes:
obtaining a mechanical limit interval of the mechanical finger in response to a control instruction;
determining a limit position within the mechanical limit interval and an avoidance angle corresponding to the limit position;
determining, based on the limit position and the avoidance angle corresponding to the limit position, an opening/closing angle of the mechanical finger; and
controlling, based on the opening/closing angle, a reduction motor to drive the mechanical finger to execute an opening action or a closing action.

In an optional implementation, the limit position includes: a first limit position and a second limit position, and before the obtaining a mechanical limit interval of the mechanical finger in response to a control instruction, the method further includes:
performing, by a controller of the mechanical finger, power-on initialization after the tote robot is powered on;
controlling, based on a first duty cycle and a first driving direction, the reduction motor to drive the mechanical finger to find the first limit position; and
controlling, based on the first duty cycle and a second driving direction, the reduction motor to drive the mechanical finger to find the second limit position, where the first limit position is opposite to the second limit position, and the second driving direction is opposite to the first driving direction.

In an optional implementation, the method further includes:
determining, based on the first limit position and the second limit position, a motor rotation angle of the reduction motor; and
outputting fault alarm information to report a fault of the reduction motor, if the rotation angle of the motor exceeds a preset angle range during the finding of the limit position; and
writing a position servo control parameter into a control program of the controller, if the rotation angle of the motor does not exceed the preset angle range during the finding of the limit position, and controlling the reduction motor to operate in a locked mode to wait for the control instruction, where the position servo control parameter includes: the first limit position and the second limit position and avoidance angles respectively corresponding to the first limit position and the second limit position.

In an optional implementation, the method further includes: triggering adjustment of the first duty cycle to a second duty cycle while obtaining the mechanical limit interval of the mechanical finger, to perform position servo control on the mechanical finger in a state of the second duty cycle, where the second duty cycle is greater than the first duty cycle.

In an optional implementation, after the controlling, based on the opening/closing angle, a reduction motor to drive the mechanical finger to execute an opening action or a closing action, the method further includes:
detecting whether there is any deviation during execution of an action by the mechanical finger, and whether rotation duration of the reduction motor exceeds predetermined duration; and
triggering, if it is determined that there is deviation during the execution of the action, and/or the rotation duration exceeds the predetermined duration, adjustment of the second duty cycle to a third duty cycle, and controlling the reduction motor to operate in the locked mode to wait for a new control instruction, where the third duty cycle is less than the second duty cycle.

According to another aspect, this application provides a system for controlling a mechanical finger, including:
a mechanical finger, disposed on a tote robot and connected to a telescopic arm of the tote robot, and configured to execute an opening action or a closing action, to cooperate with the telescopic arm to push out or pull in a tote;
a reduction motor, connected to the mechanical finger and configured to drive, during rotation, the mechanical finger to execute the opening action or the closing action; and
a controller, connected to the reduction motor, and configured to determine a mechanical limit interval of the mechanical finger in response to a control instruction; determine, based on a limit position within the mechanical limit interval and an avoidance angle corresponding to the limit position, an opening/closing angle of the mechanical finger; and control, based on the opening/closing angle, the reduction motor to drive the mechanical finger to execute the opening action or the closing action.

According to another aspect, this application provides a tote robot, including the foregoing system for controlling a mechanical finger.

According to another aspect, this application provides an apparatus for controlling a mechanical finger. The mechanical finger is disposed on a tote robot, and the apparatus includes:
an obtaining module, configured to obtain a mechanical limit interval of the mechanical finger in response to a control instruction;
a first determining module, configured to determine a limit position within the mechanical limit interval and an avoidance angle corresponding to the limit position;
a second determining module, configured to determine, based on the limit position and the avoidance angle corresponding to the limit position, an opening/closing angle of the mechanical finger; and
a control module, configured to control, based on the opening/closing angle, a reduction motor to drive the mechanical finger to execute an opening action or a closing action.

According to another aspect, this application provides an electronic device, including: a processor and a memory connected to the processor, where the memory stores computer-executable instructions; and the processor executes the computer-executable instructions stored in the memory, to implement the method according to any of foregoing implementations.

According to another aspect, this application provides a computer-readable storage medium. The computer-readable storage medium stores computer-executable instructions, and when being executed by a processor, the computer-executable instructions are used for implementing the method according to any of foregoing implementations.

According to another aspect, this application provides a computer program product. The computer program product includes a computer program. When being executed by a processor, the computer program is used for implementing the method according to any of foregoing implementations.

This application provides a method, an apparatus, and a system for controlling a mechanical finger, and a device. The method for controlling a mechanical finger includes: obtaining a mechanical limit interval of the mechanical finger in response to a control instruction; determining a limit position within the mechanical limit interval and an avoidance angle corresponding to the limit position; determining, based on the limit position and the avoidance angle corresponding to the limit position, an opening/closing angle of the mechanical finger; and controlling, based on the opening/closing angle, a reduction motor to drive the mechanical finger to execute an opening action or a closing action. This application is used to resolve a problem of mechanical impact caused by rotational motion performed by the mechanical finger that cannot be resolved by the prior art, and to achieve the technical effects of avoiding the mechanical impact caused by the rotational motion performed by the mechanical finger, reducing impact damage to parts in a tote robot, and improving reliability.

### BRIEF DESCRIPTION OF DRAWINGS

Accompanying drawings herein are incorporated into the specification and constitute a part of this specification, show embodiments that conform to this application, and are used for describing a principle of this application together with this specification.
FIG. 1 is a schematic architectural diagram of a system for controlling a mechanical finger according to an embodiment of this application;
FIG. 2 is a schematic architectural diagram of an optional mechanical design of a mechanical finger according to an embodiment of this application;
FIG. 3 is a schematic circuit diagram of an optional system for controlling a mechanical finger according to an embodiment of this application;
FIG. 4 is a schematic flowchart of a method for controlling a mechanical finger according to an embodiment of this application;
FIG. 5 is a schematic flowchart of an optional method for controlling a mechanical finger according to an embodiment of this application;
FIG. 6 is a schematic structural diagram of an apparatus for controlling a mechanical finger according to an embodiment of this application; and
FIG. 7 is a schematic structural diagram of an electronic device according to an embodiment of this application.

Specific embodiments of this application are shown by the above drawings, and more detailed description will be given below. These drawings and text description are not for limiting the scope of the concept of this application in any way, but for illustrating the concept of this application for those skilled in the art by referring to specific embodiments.

### DETAILED DESCRIPTION

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. Implementations described in the following exemplary embodiments do not represent all implementations consistent with this application. On the contrary, the implementations are merely examples of an apparatus and a method that are consistent with some aspects of this application described in detail in claims.

First, several terms described in this application are briefly introduced.

Duty cycle: is a ratio of duration for which load or a circuit is turned on to duration for which the load or the circuit is turned off.

Overshoot is a maximum instantaneous deviation from a final steady-state value of an output variable, and is usually represented by a percentage of a difference between the final steady-state value and an initial steady-state value.

With the rapid development of artificial intelligence technologies, automation technologies, and information technologies, an intelligent degree of end logistics is continuously improved. An intelligent logistics terminal is an inevitable trend of the development of end logistics, and a tote robot is one of main devices that may implement automatic transfer operations performed by the intelligent logistics terminal, thereby alleviating human heavy physical efforts by using a handling robot.

Currently, for various types of tote robots, a finger is driven by using a reduction motor, or a finger is directly driven by using a steering engine. This is mostly a single-degree-of-freedom system rotating within a limited range. That is, opening or closing of the finger corresponds to two position ranges.

To eliminate a mechanical impact caused by the rotational motion performed by the mechanical finger, the existing solution installs a position switch near the opening and closing positions. When the mechanical finger is in place, the motor is controlled through an output signal of the position switch to stop supplying power.

However, this improvement has a limited effect and system complexity increases. Because the mechanical impact cannot be eradicated, there are still problems such as breakage of a shaft of the reduction motor, burnout of the motor, deformation of a mechanical limit, and damage to the position switch.

This application provides a method, a system, and an apparatus for controlling a mechanical finger, so as to solve the foregoing technical problem in the prior art.

The following describes the technical solutions of this application and how to resolve the foregoing technical problems according to the technical solutions of this application in detail by using specific embodiments. The following several specific embodiments may be combined with each other, and the same or similar concepts or processes may not be described repeatedly in some embodiments. The following describes the embodiments of this application with reference to the accompanying drawings.

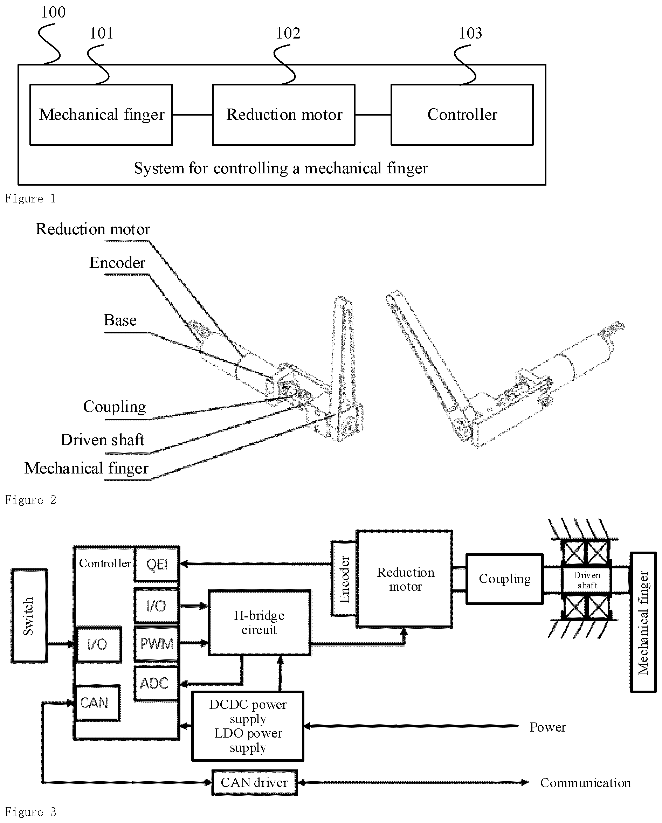

The method for controlling a mechanical finger may be applicable to a schematic architectural diagram of a system for controlling a mechanical finger shown in FIG. 1. As shown in FIG. 1, the system 100 for controlling a mechanical finger includes:
a mechanical finger 101, disposed on a tote robot and connected to a telescopic arm of the tote robot, and configured to execute an opening action or a closing action, to cooperate with the telescopic arm to push out or pull in a tote;
a reduction motor 102, connected to the mechanical finger 101 and configured to drive, during rotation, the mechanical finger to execute the opening action or the closing action; and
a controller 103, connected to the reduction motor 102, and configured to determine a mechanical limit interval of the mechanical finger in response to a control instruction; determine, based on a limit position within the mechanical limit interval and an avoidance angle corresponding to the limit position, an opening/closing angle of the mechanical finger; and control, based on the opening/closing angle, the reduction motor to drive the mechanical finger to execute the opening action or the closing action.

Optionally, the tote robot in this embodiment of this application may be a tote handling robot, and the tote robot includes a fork apparatus. The fork apparatus includes: a fork body, a telescopic arm disposed on the fork body, and a mechanical finger disposed on the telescopic arm.

In this embodiment of this application, an action executed by the mechanical finger is associated with an action executed by the telescopic arm. For example, when the telescopic arm extends, the mechanical finger correspondingly executes an opening action, to push out the container on the fork body; or when the telescopic arm retracts, the mechanical finger correspondingly executes a closing action, to pull the container into the fork body.

Specifically, the limit position within the mechanical limit interval is an initial boundary position at which the mechanical finger can rotate in an initial state. Specifically, there are two limit positions, at two ends. To avoid mechanical collision caused by the rotation of the mechanical finger, the initial boundary position at each end is respectively corrected by using the avoidance angle, to obtain a motion limit of the mechanical finger, which is the opening/closing angle of the mechanical finger during subsequent opening and closing action.

Optionally, the opening/closing angle includes: an opening angle by which the mechanical finger rotates relative to a rotation fulcrum when the mechanical finger executes the opening action; and a closing angle by which the mechanical finger rotates relative to a rotation fulcrum when the mechanical finger executes the closing action.

The controller in this embodiment of this application may be a microcontroller. The controller is connected to the reduction motor. The control instruction is an instruction for controlling the mechanical finger to cooperate with the telescopic arm to execute the opening or closing action. For example, a power switch of the tote robot may be turned on or an operation mode of tote transfer may be selected, to send a control instruction to the tote robot, instructing the tote robot to enter the operation mode and to perform a tote transfer task.

In an example, as shown in FIG. 2, the reduction motor is fixed to a base. The reduction motor drives one end of a driven shaft by using a coupling. The mechanical finger is fixed to the other end of the driven shaft. The design of the system for controlling a mechanical finger is simple, and a position switch does not need to be provided. Mainly with a control technology, the opening/closing angle of the mechanical finger is determined based on the limit position within the mechanical limit interval of the mechanical finger and the avoidance angle corresponding to the limit position. In addition, the reduction motor is controlled, based on the opening/closing angle, to drive the mechanical finger to execute the opening action or a closing action. In this way, the problem of mechanical impact caused by the rotational motion performed by the mechanical finger is resolved.

In this embodiment of this application, the limit position within the mechanical limit interval may include a first limit position and a second limit position. For example, the first limit position is a 0° position, and the second limit position is a 90° position. Δθ may be preset as the avoidance angle. Optionally, the maximum allowable overshoot is less than Δθ by default.

It should be noted that, the avoidance angles corresponding to the first limit position and the second limit position may be the same or may be different. During use, the limit position and the avoidance angle corresponding to the limit position may further be modified in a control program.

In an example, if the avoidance angles corresponding to the first limit position and the second limit position are the same, specifically, a first target position obtained by correcting the first limit position based on the avoidance angle corresponding to the first limit position may be 0° + Δθ, and a second target position obtained by correcting the second limit position based on the avoidance angle corresponding to the second limit position may be 90° - Δθ.

Further, subsequently, the opening/closing angle of the mechanical finger may be determined based on the first target location and the second target location, to execute position servo control. The reduction motor is controlled, based on the opening/closing angle determined above, to drive the mechanical finger to execute the opening action or the closing action. In another optional embodiment, FIG. 3 is a schematic circuit diagram of an optional system for controlling a mechanical finger. As shown in FIG. 3, an encoder is further provided at the other end of the reduction motor (an end opposite to the base of the reduction motor). The encoder is connected to the controller by using an omni-directional encoder (QEI) interface. The encoder may be used as a sensor necessary for subsequent servo control by the system for controlling a mechanical finger.

Optionally, as still shown in FIG. 3, the controller is powered by an LDO power supply, the reduction motor is connected to the controller by using an H-bridge circuit, an I/O interface, a PWM interface, and an ADC interface. A CAN interface of the controller is connected to a CAN driver, configured for communication of the controller. The H-bridge circuit is further connected to a DCDC power supply, configured to power the reduction motor.

In this embodiment of this application, the encoder, the reduction motor, and the controller cooperate to implement a closed-loop position servo control. For example, the position servo control is specifically embodied in a control phase (including a startup phase, a middle process phase, and an approach to position phase) of the opening and closing action and a normal maintenance phase.

In this embodiment of this application, the closed-loop position servo control is used. In addition, in this embodiment of this application, acceleration and deceleration control is further included in the position servo control process. Therefore, the mechanical collision caused by the rotation of the mechanical finger can be directly avoided, thereby reducing impact damage to parts, and improving system reliability Moreover, such closed-loop position servo control can reduce, within a particular range, an impact of a part/status difference on performance without changing a structural part of the mechanical finger and without changing an existing control program.

In addition, in a specific control phase, a maximum duty cycle is changed mainly based on different control phases, to implement position servo, and to control the mechanical finger to execute the opening and closing action and implement process control. For example, an inhibition window function is applied to the maximum duty cycle according to the control phase. Optionally, the inhibition window function may be a trapezoidal window function or a Hanning window function.

In an optional example, the duty cycle can be adjusted up or down according to a start and an end of the position servo control process. Depending on differences in motor characteristics and scene requirements, for example, after power-on initialization, the duty cycle may be set to 20% -40% of the maximum duty cycle. In case of an action error or rotation timeout, the duty cycle may be set to 30% -50% of the maximum duty cycle. During the position servo control, the duty cycle may be set to be relatively high, for example, to 85%-90% of the maximum duty cycle, or even close to 100%. This may generate smooth and rapid motion process control, and subsequently keeps a locking force but does not cause the motor to be locked and burned out by a large current for a long time. A better result is obtained in terms of eliminating mechanical collision, achieving quick in-place, providing the locking force, and preventing the motor from being blocked and overheated, and the like.

In an optional embodiment, this embodiment of this application provides that, the controller may control, in a container pulling operation, the reduction motor to apply a corrective force only after identifying that the mechanical finger deflects. There is no current in a normal state. Therefore, a motor overheat is avoided, while the locking force is controlled, so that energy consumption can be reduced, and a technical effect that cannot be obtained by a control manner of pressing the finger at the limit position with normal output current is achieved.

According to one or more embodiments of this application, this application further provides a tote robot, including the foregoing system for controlling a mechanical finger.

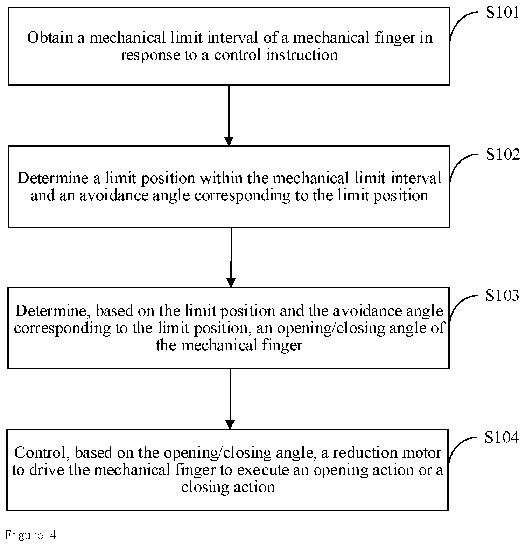

FIG. 4 is a schematic flowchart of a method for controlling a mechanical finger according to an embodiment of this application. As shown in FIG. 4, the method includes:
S101: Obtain a mechanical limit interval of the mechanical finger in response to a control instruction.
S102: Determine a limit position within the mechanical limit interval and an avoidance angle corresponding to the limit position.
S103: Determine, based on the limit position and the avoidance angle corresponding to the limit position, an opening/closing angle of the mechanical finger.
S104: Control, based on the opening/closing angle, a reduction motor to drive the mechanical finger to execute an opening action or a closing action.

Optionally, in this embodiment of this application, the mechanical finger is disposed on the tote robot, and is connected to a telescopic arm of the tote robot. In this embodiment of this application, an action executed by the mechanical finger is associated with an action executed by the telescopic arm. For example, when the telescopic arm extends, the mechanical finger correspondingly executes an opening action, to push out the container on the fork body; or when the telescopic arm retracts, the mechanical finger correspondingly executes a closing action, to pull the container into the fork body.

The executing subject in this embodiment of this application is a controller in the system for controlling a mechanical finger. The controller is connected to the reduction motor. The control instruction is an instruction for controlling the mechanical finger to cooperate with the telescopic arm to execute the opening or closing action. For example, a power switch of the tote robot may be turned on or an operation mode of tote transfer may be selected, to send a control instruction to the tote robot, instructing the tote robot to enter the operation mode and to perform a tote transfer task.

In an example, the reduction motor is fixed to a base. The reduction motor drives one end of a driven shaft by using a coupling. The mechanical finger is fixed to the other end of the driven shaft. The design of the system for controlling a mechanical finger is simple, and a position switch does not need to be provided. Mainly with a control technology, the opening/closing angle of the mechanical finger is determined based on the limit position within the mechanical limit interval of the mechanical finger and the avoidance angle corresponding to the limit position. In addition, the reduction motor is controlled, based on the opening/closing angle, to drive the mechanical finger to execute the opening action or a closing action. In this way, the problem of mechanical impact caused by the rotational motion performed by the mechanical finger is resolved.

Specifically, the limit position within the mechanical limit interval is an initial boundary position at which the mechanical finger can rotate in an initial state. Specifically, there are two limit positions, at two ends. To avoid mechanical collision caused by the rotation of the mechanical finger, the initial boundary location at each end is respectively corrected by using the avoidance angle, to obtain a motion limit of the mechanical finger, which is the opening/closing angle of the mechanical finger during subsequent opening and closing action.

Optionally, the opening/closing angle includes: an opening angle by which the mechanical finger rotates relative to a rotation fulcrum when the mechanical finger executes the opening action; and a closing angle by which the mechanical finger rotates relative to a rotation fulcrum when the mechanical finger executes the closing action.

In this embodiment of this application, the limit position within the mechanical limit interval may include a first limit position and a second limit position. The first limit position is opposite to the second limit position. One is an end at which a limit angle is small, and the other is an end at which a limit angle is large. For example, the first limit position is a 0° position, and the second limit position is a 90° position. Δθ may be preset as the avoidance angle. Optionally, the maximum allowable overshoot is less than Δθ by default.

It should be noted that, the avoidance angles corresponding to the first limit position and the second limit position may be the same or may be different. During use, the limit position and the avoidance angle corresponding to the limit position may further be modified in a control program.

In an example, if the avoidance angles corresponding to the first limit position and the second limit position are the same, specifically, a first target position obtained by correcting the first limit position based on the avoidance angle corresponding to the first limit position may be 0° + Δθ, and a second target position obtained by correcting the second limit position based on the avoidance angle corresponding to the second limit position may be 90° - Δθ.

Further, subsequently, the opening/closing angle of the mechanical finger may be determined based on the first target location and the second target location, to execute position servo control. The reduction motor is controlled, based on the opening/closing angle determined above, to drive the mechanical finger to execute the opening action or the closing action.

In another optional embodiment, an encoder is further provided at the other end of the reduction motor (an end opposite to the base of the reduction motor). The encoder may be used as a sensor necessary for subsequent servo control by the system for controlling a mechanical finger. In this embodiment of this application, the encoder, the reduction motor, and the controller cooperate to implement a closed-loop position servo control. For example, the position servo control is specifically embodied in a control phase (including a startup phase, a middle process phase, and an approach to position phase) of the opening and closing action and a normal maintenance phase.

In this embodiment of this application, the closed-loop position servo control is used. In addition, in this embodiment of this application, acceleration and deceleration control is further included in the position servo control process. Therefore, the mechanical collision caused by the rotation of the mechanical finger can be directly avoided, thereby reducing impact damage to parts, and improving system reliability Moreover, such closed-loop position servo control can reduce, within a particular range, an impact of a part/status difference on performance without changing a structural part of the mechanical finger and without changing an existing control program.

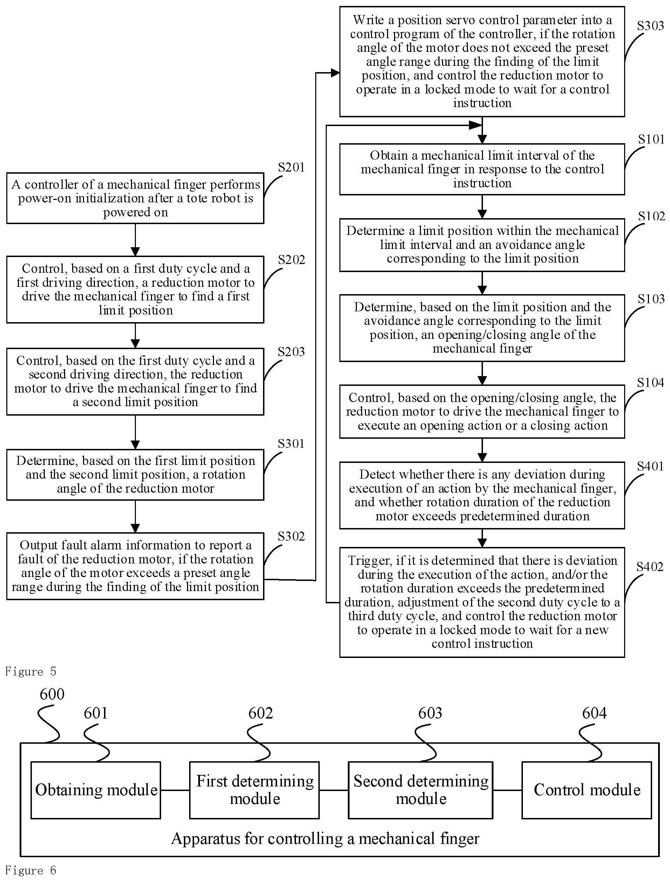

In an optional implementation, as shown in FIG. 5, before the obtaining a mechanical limit interval of the mechanical finger in response to a control instruction, the method further includes:
S201: Perform power-on initialization on the mechanical finger after the tote robot is powered on.
S202: Control, based on a first duty cycle and a first driving direction, a reduction motor to drive the mechanical finger to find a first limit position.
S203: Control, based on the first duty cycle and a second driving direction, the reduction motor to drive the mechanical finger to find a second limit position.

Optionally, the first limit position is opposite to the second limit position, and the second driving direction is opposite to the first driving direction.

Optionally, the first duty cycle may be 20%-40% of a maximum duty cycle, for example, may be, but is not limited to, 20%, 25%, 30%, or 40%.

For example, if the first driving direction is a positive direction of the mechanical finger relative to the rotation fulcrum, the second driving direction is an opposite direction of the mechanical finger relative to the rotation fulcrum; otherwise, if the second driving direction is a positive direction of the mechanical finger relative to the rotation fulcrum, the first driving direction is an opposite direction of the mechanical finger relative to the rotation fulcrum.

In this embodiment of this application, the limit position within the mechanical limit interval may include a first limit position and a second limit position. The first limit position is opposite to the second limit position. One is an end at which a limit angle is small, and the other is an end at which a limit angle is large. For example, the first limit position is a 0° position, and the second limit position is a 90° position.

In this embodiment of this application, in a specific control phase, a maximum duty cycle is changed mainly based on different control phases, to implement position servo, and to control the mechanical finger to execute the opening and closing action and implement process control. For example, an inhibition window function is applied to the maximum duty cycle according to the control phase. Optionally, the inhibition window function may be a trapezoidal window function or a Hanning window function.

In an optional example, the duty cycle can be adjusted up or down according to different position servo control processes. Depending on differences in motor characteristics and scene requirements, for example, after power-on initialization, the duty cycle may be set to 20% -40% of the maximum duty cycle.

In an optional implementation, as still shown in FIG. 5, the method further includes:
S301: Determine, based on the first limit position and the second limit position, a motor rotation angle of the reduction motor.
S302: Output fault alarm information to report a fault of the reduction motor, if the rotation angle of the motor exceeds a preset angle range during the finding of the limit position.
S303: Write a position servo control parameter into a control program of the controller, if the rotation angle of the motor does not exceed the preset angle range during the finding of the limit position, and control the reduction motor to operate in a locked mode to wait for a control instruction.

Optionally, the position servo control parameter includes: the first limit position and the second limit position and avoidance angles respectively corresponding to the first limit position and the second limit position.

In this embodiment of this application, after controlling the reduction motor to drive the mechanical finger to find the first limit position and the second limit position, angle conversion may be performed by using the encoder, to determine the motor rotation angle of the reduction motor based on the found first limit position and second limit position. Then, fault alarm information is outputted to report a fault of the reduction motor, if the rotation angle of the motor exceeds a preset angle range during the finding of the limit position; or the first limit position and the second limit position and the avoidance angles respectively corresponding to the first limit position and the second limit position are written, as position servo control parameters, into a control program of the reduction motor, if the rotation angle of the motor does not exceed the preset angle range during the finding of the limit position. Then, the reduction motor is controlled to operate in the locked mode to wait for the control instruction.

Optionally, in this embodiment of this application, a position ring may be used to implement a self-locking function of the reduction motor. When in a position servo control mode, if there is no new control instruction, the reduction motor will maintain a current position and is in a locked state. However, microscopically, there may also be slight shaking, which is a dynamic and constantly adjusted state.

In an optional implementation, the method further includes:
triggering adjustment of the first duty cycle to a second duty cycle while obtaining the mechanical limit interval of the mechanical finger, to perform position servo control on the mechanical finger in a state of the second duty cycle.

Optionally, the second duty cycle is greater than the first duty cycle.

Optionally, the first duty cycle may be 20%-40% of the maximum duty cycle, and the second duty cycle may be 85%-90% of the maximum duty cycle, or even close to 100%.

In an optional example, the duty cycle can be adjusted up or down according to different position servo control processes. Depending on differences in motor characteristics and scene requirements, for example, while obtaining the mechanical limit interval of the mechanical finger, adjustment of the first duty cycle to a second duty cycle is triggered, to perform position servo control on the mechanical finger in a state of the second duty cycle. That is, during the position servo control, the duty cycle may be adjusted to be relatively high, for example, to 85%-90% of the maximum duty cycle, or even be close to 100%. This may generate smooth and rapid motion process control, and subsequently keeps a locking force but does not cause the motor to be locked and burned out by a large current for a long time.

Further, in this embodiment of this application, a better result is obtained in terms of problems such as eliminating mechanical collision, achieving quick in-place, providing the locking force, and preventing the motor from being blocked and overheated, and the like.

In an optional implementation, as shown in FIG. 5, after the controlling, based on the opening/closing angle, a reduction motor to drive the mechanical finger to execute an opening action or a closing action, the method further includes:
S401: Detect whether there is any deviation during execution of an action by the mechanical finger, and whether rotation duration of the reduction motor exceeds predetermined duration.
S402: Trigger, if it is determined that there is deviation during the execution of the action, and/or the rotation duration exceeds the predetermined duration, adjustment of the second duty cycle to a third duty cycle, and control the reduction motor to operate in the locked mode to wait for a new control instruction.

Optionally, the third duty cycle is less than the second duty cycle. Optionally, the first duty cycle may be 20%-40% of the maximum duty cycle, and the second duty cycle may be 85%-90% of the maximum duty cycle, or even close to 100%. According to different operation conditions, motor types, and the like, the third duty cycle may be 15%-50% of the maximum duty cycle.

In an optional example, the duty cycle can be adjusted up or down according to different position servo control processes. Depending on differences in motor characteristics and scene requirements, for example, after power-on initialization, the duty cycle may be set to 20% -40%. During the position servo control, the duty cycle may be set to be relatively high, for example, to 85%-90%, or even close to 100%. In case of an action error or rotation timeout, the duty cycle may be adjusted down to 30% -50%. This may generate smooth and rapid motion process control, and subsequently keeps a locking force but does not cause the motor to be locked and burned out by a large current for a long time.

In an optional embodiment, this embodiment of this application provides that, the controller may control, in a container pulling operation, the reduction motor to apply a corrective force only after identifying that the mechanical finger deflects. There is no current in a normal state. Therefore, a motor overheat is avoided, while the locking force is controlled, so that energy consumption can be reduced, and a technical effect that cannot be obtained by a control manner of pressing the finger at the limit position with normal output current is achieved.

According to one or more embodiments of this application, an apparatus for controlling a mechanical finger is provided. FIG. 6 is a schematic structural diagram of an apparatus for controlling a mechanical finger according to an embodiment of this application. As shown in FIG. 6, the apparatus 600 for controlling a mechanical finger includes:
an obtaining module 601, configured to obtain a mechanical limit interval of the mechanical finger in response to a control instruction;
a first determining module 602, configured to determine a limit position within the mechanical limit interval and an avoidance angle corresponding to the limit position;
a second determining module 603, configured to determine, based on the limit position and the avoidance angle corresponding to the limit position, an opening/closing angle of the mechanical finger; and
a control module 604, configured to control, based on the opening/closing angle, a reduction motor to drive the mechanical finger to execute an opening action or a closing action.

According to one or more embodiments of this application, the limit position includes: a first limit position and a second limit position, and the apparatus further includes:
an initialization module, configured to perform power-on initialization on the mechanical finger after the tote robot is powered on;
a first motor control module, configured to control, based on a first duty cycle and a first driving direction, the reduction motor to drive the mechanical finger to find the first limit position; and
a second motor control module, configured to control, based on the first duty cycle and a second driving direction, the reduction motor to drive the mechanical finger to find the second limit position, where
the first limit position is opposite to the second limit position, and the second driving direction is opposite to the first driving direction.

According to one or more embodiments of this application, the apparatus further includes:
a third determining module, configured to determine, based on the first limit position and the second limit position, a motor rotation angle of the reduction motor;
an information output module, configured to output fault alarm information to report a fault of the reduction motor, if the rotation angle of the motor exceeds a preset angle range during the finding of the limit position; and
a mode control module, configured to write a position servo control parameter into a control program of the tote robot, if the rotation angle of the motor does not exceed the preset angle range during the finding of the limit position, and control the reduction motor to operate in a locked mode to wait for the control instruction, where the position servo control parameter includes: the first limit position and the second limit position and avoidance angles respectively corresponding to the first limit position and the second limit position.

In an optional implementation, the apparatus further includes: a first adjustment module, configured to trigger adjustment of the first duty cycle to a second duty cycle while obtaining the mechanical limit interval of the mechanical finger, to perform position servo control on the mechanical finger in a state of the second duty cycle, where the second duty cycle is greater than the first duty cycle.

In an optional implementation, the apparatus further includes:
a detection module, configured to detect whether there is any deviation during execution of an action by the mechanical finger, and whether rotation duration of the reduction motor exceeds predetermined duration; and
a second adjustment module, configured to trigger, if it is determined that there is deviation during the execution of the action, and/or the rotation duration exceeds the predetermined duration, adjustment of the second duty cycle to a third duty cycle, and controlling the reduction motor to operate in the locked mode to wait for a new control instruction, where the third duty cycle is less than the second duty cycle.

In an exemplary embodiment, an embodiment of this application further provides an electronic device, including: a processor and a memory connected to the processor, where
the memory is configured to store computer-executable instructions; and
the processor executes the computer-executable instructions stored in the memory, to implement the method according to any of foregoing embodiments.

In an exemplary embodiment, an embodiment of this application further provides a computer-readable storage medium. The computer-readable storage medium stores computer-executable instructions. When being executed by a processor, the computer-executable instructions are used for implementing the method according to any of foregoing embodiments.

In an exemplary embodiment, an embodiment of this application further provides a computer program product. The computer program product includes a computer program. When being executed by a processor, the computer program is used for implementing the method according to any of foregoing embodiments.

In order to implement the foregoing embodiments, an embodiment of this application further provides an electronic device.

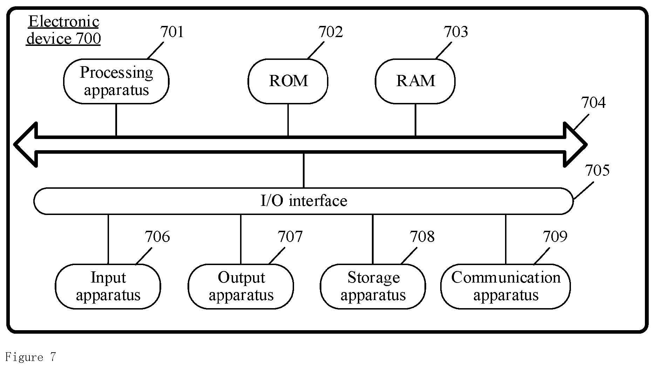

Referring to FIG. 7, FIG. 7 is a schematic structural diagram of an electronic device 700 suitable for implementing the embodiments of this application. The electronic device 700 may be a terminal device or a server. The terminal device may include, but is not limited to, mobile terminals such as a mobile phone, a notebook computer, a digital broadcast receiver, a personal digital assistant (PDA), a portable Android device (PAD), a portable media player (PMP), and an in-vehicle terminal (for example, an in-vehicle navigation terminal), and fixed terminals such as a digital TV and a desktop computer. The electronic device shown in FIG. 7 is merely an example, and does not constitute any limitation on functions and use ranges of the embodiments of this application.

As shown in FIG. 7, the electronic device 700 includes a processing apparatus (for example, a central processor, a graphics processor, and the like) 701, which can perform various appropriate actions and processing according to a program stored in a read-only memory (ROM) 702 or a program loaded into a random access memory (RAM) 703 from a storage 708. The RAM 703 further stores various programs and data required for operations of the electronic device 700. The processing apparatus 701, the ROM 702, and the RAM 703 are connected to each other through a bus 704. An input/output (I/O) interface 705 is also connected to the bus 704.

Generally, the following apparatuses may be connected to the I/O interface 705: an input apparatus 707 including, for example, a touchscreen, a touchpad, a keyboard, a mouse, a camera, a microphone, an accelerometer, and a gyroscope; an output apparatus 707 including, for example, a liquid crystal display (LCD), a speaker, and a vibrator; a storage 708 including, for example, a magnetic tape or a hard disk; and a communications apparatus 707. The communications apparatus 707 may enable the electronic device 700 to perform wireless or wired communication with another device to exchange data. Although FIG. 7 shows the electronic device 700 having various apparatuses, it should be understood that, it is not required to implement or have all the apparatuses shown. Alternatively, the apparatus may be implemented or may include more or fewer apparatuses.

Particularly, according to an embodiment of this application, the processes described in the above with reference to the flowcharts may be implemented as computer software programs. For example, this embodiment of this application includes a computer program product, the computer program product includes a computer program carried on a computer-readable medium, and the computer program includes program code used for performing the methods shown in the flowcharts. In such embodiments, the computer program may be downloaded and installed from a network through the communications apparatus 707, or installed from the storage 708, or installed from the ROM 702. When the computer program is executed by the processing apparatus 701, the above functions defined in the method of this application are performed.

It should be noted that, the computer-readable medium according to this application may be a computer-readable signal medium or a computer-readable storage medium or any combination of the two media. The computer-readable storage medium may be, for example, but is not limited to, an electric, magnetic, optical, electromagnetic, infrared, or semi-conductive system, apparatus, or component, or any combination of the above. More specific examples of the computer-readable storage medium may include, but are not limited to: an electrical connection having one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In this application, the computer-readable storage medium may be any tangible medium containing or storing a program, and the program may be used by or used in combination with an instruction execution system, an apparatus, or a device. In this application, a computer-readable signal medium may include a data signal being in a baseband or propagated as a part of a carrier wave, the data signal carrying computer-readable program code. A data signal propagated in such a way may assume a plurality of forms, including, but not limited to, an electromagnetic signal, an optical signal, or any appropriate combination thereof. The computer-readable signal medium may be further any computer-readable medium in addition to the computer-readable storage medium. The computer-readable signal medium may send, propagate, or transmit a program that is used by or used in conjunction with an instruction execution system, an apparatus, or a device. The program code included in the computer-readable medium may be transmitted by using any suitable medium, including, but not limited to: a wire, an optical cable, a radio frequency (RF), or the like, or any suitable combination of the foregoing.

The computer readable medium may be included in the electronic device. Alternatively, the computer readable medium may be separate and is not assembled into the electronic device.

The computer-readable medium carries one or more programs, the one or more programs, when executed by the electronic device, causing the electronic device to implement the method described in the foregoing embodiments.

The computer program code used for executing the operations of this application may be written by using one or more programming languages or a combination thereof. The programming languages include an object-oriented programming language such as Java, Smalltalk and C++, and also include a conventional procedural programming language such as "C" or similar programming languages. The program code may be completely executed on a user computer, partially executed on a user computer, executed as an independent software package, partially executed on a user computer and partially executed on a remote computer, or completely executed on a remote computer or server. For the case involving the remote computer, the remote computer may be connected to a computer of a user through any type of network including a local area network (LAN) or a wide area network (WAN), or may be connected to an external computer (for example, through the Internet by using an Internet service provider).

The flowcharts and block diagrams in the accompanying drawings illustrate possible system architectures, functions and operations that may be implemented by a system, a method, and a computer program product according to various embodiments of this application. In this regard, each box in a flowchart or a block diagram may represent a module, a program segment, or a part of code. The module, the program segment, or the part of code includes one or more executable instructions used for implementing designated logic functions. It should also be noted that, in some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. It should also be noted that, each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The units described in the embodiments of this application may be implemented by means of software or hardware. Names of the units do not constitute a limitation on the units in a specific case. For example, a first acquisition unit can also be described as a "unit that acquires at least two Internet Protocol addresses".

The functions described above in this specification may be at least partially performed by one or more hardware logic components. For example, and without limitation, exemplary types of hardware logic components that can be used include: a field programmable gate array (FPGA), an application-specific integrated circuit (ASIC), an application-specific standard product (ASSP), a system on-chip (SOC), a complex programmable logic device (CPLD), and the like.

In the context of this application, a machine-readable medium may be a tangible medium that may include or store a program used by or used in conjunction with an instruction execution system, an apparatus, or a device. The machine-readable medium may be a machine-readable signal medium or a machine-readable storage medium. The machine-readable medium may include, but is not limited to, an electric, magnetic, optical, electromagnetic, infrared, or semi-conductive system, apparatus, or device, or any suitable combination of the foregoing. More specific examples of the machine-readable storage medium include: an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

## Claims

1. A method for controlling a mechanical finger, wherein the mechanical finger is disposed on a tote robot, and the method comprises:
obtaining a mechanical limit interval of a mechanical finger in response to a control instruction;
determining a limit position within the mechanical limit interval and an avoidance angle corresponding to the limit position;
determining, based on the limit position and an avoidance angle corresponding to the limit position, an opening/closing angle of the mechanical finger; and
controlling, based on the opening/closing angle, a reduction motor to drive the mechanical finger to execute an opening action or a closing action.

2. The method according to claim 1, wherein the limit position comprises: a first limit position and a second limit position, and before the obtaining a mechanical limit interval of a mechanical finger in response to a control instruction, the method further comprises:
performing, by a controller of the mechanical finger, power-on initialization after the tote robot is powered on;
controlling, based on a first duty cycle and a first driving direction, a reduction motor to drive the mechanical finger to find a first limit position; and
controlling, based on the first duty cycle and a second driving direction, a reduction motor to drive the mechanical finger to find a second limit position, wherein the first limit position is opposite to the second limit position, and the second driving direction is opposite to the first driving direction.

3. The method according to claim 2, wherein the method further comprises:
determining, based on the first limit position and the second limit position, a motor rotation angle of the reduction motor; and
outputting fault alarm information to report a fault of the reduction motor, if a rotation angle of the motor exceeds a preset angle range during the finding of a limit position; and
writing a position servo control parameter into a control program of the controller, if a rotation angle of the motor does not exceed the preset angle range during the finding of a limit position, and controlling the reduction motor to operate in a locked mode to wait for the control instruction, wherein the position servo control parameter comprises: the first limit position and the second limit position and avoidance angles respectively corresponding to the first limit position and the second limit position.

4. The method according to claim 2, wherein the method further comprises:
triggering adjustment of the first duty cycle to a second duty cycle while obtaining a mechanical limit interval of the mechanical finger, to perform position servo control on the mechanical finger in a state of the second duty cycle, wherein the second duty cycle is greater than the first duty cycle.

5. The method according to any one of claims 1 to 4, wherein after the controlling, based on the opening/closing angle, a reduction motor to drive the mechanical finger to execute an opening action or a closing action, the method further comprises:
detecting whether there is any deviation during execution of an action by the mechanical finger, and whether rotation duration of the reduction motor exceeds predetermined duration; and
triggering, if it is determined that there is deviation during the execution of the action, and/or the rotation duration exceeds the predetermined duration, adjustment of the second duty cycle to a third duty cycle, and controlling the reduction motor to operate in a locked mode to wait for a new control instruction, wherein the third duty cycle is less than the second duty cycle.

6. A system for controlling a mechanical finger, comprising:
a mechanical finger, disposed on a tote robot and connected to a telescopic arm of the tote robot, and configured to execute an opening action or a closing action, to cooperate with the telescopic arm to push out or pull in a tote;
a reduction motor, connected to the mechanical finger and configured to drive, during rotation, the mechanical finger to execute the opening action or the closing action; and
a controller, connected to the reduction motor, and configured to determine a mechanical limit interval of a mechanical finger in response to a control instruction; determine, based on a limit position within the mechanical limit interval and an avoidance angle corresponding to the limit position, an opening/closing angle of the mechanical finger; and control, based on the opening/closing angle, a reduction motor to drive the mechanical finger to execute an opening action or a closing action.

7. A tote robot, comprising the system for controlling a mechanical finger according to claim 6.

8. An apparatus for controlling a mechanical finger, wherein the mechanical finger is disposed on a tote robot, and the apparatus comprises:
an obtaining module, configured to obtain a mechanical limit interval of a mechanical finger in response to a control instruction;
a first determining module, configured to determine a limit position within the mechanical limit interval and an avoidance angle corresponding to the limit position;
a second determining module, configured to determine, based on the limit position and an avoidance angle corresponding to the limit position, an opening/closing angle of the mechanical finger; and
a control module, configured to control, based on the opening/closing angle, a reduction motor to drive the mechanical finger to execute an opening action or a closing action.

9. An electronic device, comprising: a processor and a memory connected to the processor, wherein
the memory is configured to store computer-executable instructions; and
the processor executes computer-executable instructions stored in the memory, to implement the method according to any one of claims 1 to 6.

10. A computer-readable storage medium, storing computer-executable instructions therein, and when being executed by a processor, the computer-executable instructions are used for implementing the method according to any one of claims 1 to 6.

11. A computer program product, comprising a computer program, and when being executed by a processor, the computer program is used for implementing the method according to any one of claims 1 to 6.
